# FASCICULE DE BREVET EUROPEEN

(11) **EP 1 717 081 B1**
(45) Date de publication et mention de la délivrance du brevet: **22.04.2009**
(21) Numéro de dépôt: 06350003.7
(22) Date de dépôt: 15.03.2006
(51) Int. Cl.: B60J 7/22, B60J 1/20

(54) **Déflecteur d'air**
Windabweiser
Wind deflector

(30) Priorité: 08.04.2005 FR 0503526
(43) Date de publication de la demande: 02.11.2006
(73) Titulaire: Heuliez, 79140 Cerizay (FR)
(72) Inventeur: Quéveau, Gérard, 79140 Le Pin (FR); Quéneau, Paul, 79140 Montravers (FR); Guillez, Jean Marc, 79140 Cirières (FR)
(74) Mandataire: Tournel, Jean Louis

(56) Documents cités:
- EP-A- 0 895 889
- FR-A- 2 842 468
- FR-A- 2 846 282
- US-A- 5 630 640
- US-A1- 2003 038 512
- US-A1- 2003 222 480
- US-B1- 6 183 041

## Description

L'invention se rapporte à un déflecteur d'air avant destiné à équiper un véhicule du type cabriolet.

Elle se rapporte également au véhicule pourvu du dit déflecteur.

Les cabriolets ont un toit rigide ou souple qui se rétractent vers l'arrière afin que le conducteur et les passagers puissent bénéficier du soleil.

Lorsque le toit est rétracté, l'écoulement de l'air le long de la carrosserie est perturbé.

Pour tenir compte de cet écoulement, le pare-brise de ces véhicules se prolonge un peu plus en arrière que pour les véhicules équivalents n'ayant pas de toit rétractable.

Cette modification permet de protéger le conducteur et le passager avant des tourbillons d'air qui se produisent du fait de la création d'une dépression.

Ces tourbillons augmentent sérieusement lorsque le véhicule circule à haute vitesse et il est alors connu de placer à l'arrière des sièges un filet qui va limiter également l'effet perçu par les passagers.

Si cette solution s'avère satisfaisante pour les cabriolets à deux places, elle est insuffisante pour les cabriolets à quatre places et en outre rend indisponibles les places arrières.

Les passagers arrières sont toujours soumis aux turbulences.

Il est connu FR-A-2.842.468 d'équiper le bord de fuite d'un pare-brise d'un panneau en forme de pare-soleil s'étendant sur toute la largeur du pare-brise, ce panneau présentant une écope pour dévier une partie de l'air vers l'intérieur de l'habitacle.

En position escamotée, le panneau est rabattu contre la face interne du pare-brise.

Dans une variante de réalisation, ce panneau est en deux parties partiellement emboîtées l'une dans l'autre de sorte que le conducteur peut tirer à la main sur l'une des parties en vue d'augmenter l'étendue du panneau.

Ce dispositif a pour vocation de dévier l'air vers le centre de l'habitacle et d'éviter les remous. Toutefois les passagers arrières sont soumis à l'air s'écoulant de l'écope.

Il ne résout donc pas le problème des turbulences pour les passagers arrières.

L'invention se propose d'apporter une nouvelle solution notamment pour les cabriolets à quatre places.

A cet effet, l'invention a pour objet un déflecteur d'air avant destiné à équiper un véhicule du type cabriolet, ce déflecteur étant caractérisé en ce qu'il comprend un ensemble de plusieurs lamelles superposées et un moyen de déplacement de ces lamelles en vue d'au moins translater les dites lamelles les unes par rapport aux autres vers l'arrière pour étendre la surface du déflecteur.

L'invention a également pour objet le véhicule équipé de ce déflecteur.

L'invention sera bien comprise à l'aide de la description ci-après faite à titre d'exemple non limitatif en regard du dessin qui représente schématiquement
FIG 1 : un déflecteur selon l'invention monté sur la traverse supérieure d'un pare-brise
FIG 2: une vue agrandie du déflecteur de la figure 1
FIG 3 : une coupe selon III -III de la figure 2
FIG 4 :coupe selon IV-IV de la figure 3.
FIG 5 : Coupe selon V-V de la figure 4
FIG 6 : Une variante de réalisation.

En se reportant au dessin, on voit un déflecteur 1 avant monté sur la traverse 2 supérieure du pare-brise.

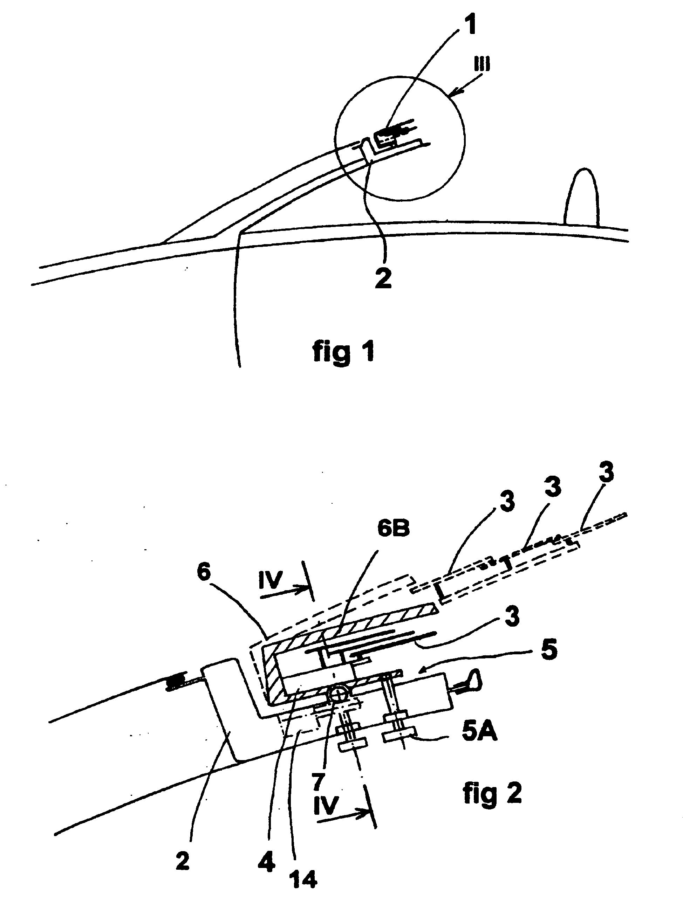

En figure 1 et 2, on voit que la traverse supérieure a, localement, une section en L en vue de loger le déflecteur en sa position inactive.

Le déflecteur 1 comprend un ensemble de plusieurs lamelles 3 superposées et un moyen 4 de déplacement de ces lamelles 3 en vue d'au moins translater les dites lamelles les unes par rapport aux autres vers l'arrière pour étendre la surface du déflecteur.

Il comprend également un moyen 5 de manoeuvre pour orienter angulairement l'ensemble des lamelles 3.

L'ensemble des lamelles est porté par un support 6 lequel est orientable angulairement.

La figure 2 montre en gros plan ce support avec le déflecteur en position inactive. En pointillé, on voit le déflecteur en position active, c'est à dire déployé et orienté angulairement différemment.

Ce support 6 est relié à la traverse 2 supérieure par une articulation 7 d'axe transversal au sens conventionnel du déplacement du véhicule équipé de ce déflecteur en sorte que par basculement de ce support on oriente angulairement les lamelles.

Ce support 6 se présente sous la forme d'un profilé en U couché. La cavité du U permet de loger l'ensemble des lamelles et leur moyen 4 de déplacement.

La face inférieure 6A du U couché est donc articulée sur la traverse supérieure.

En position inactive, la face supérieure 6B du U couché se trouve dans le prolongement de la courbure du pare-brise.

Selon le mode de réalisation représenté figure 1 et 2 , la face inférieure du U couché se trouve à une certaine distance de la traverse supérieure en vue de permettre le basculement du support du fait que l'axe d'articulation est éloigné du bord avant de la face inférieure du profilé en U couché.

On pourrait prévoir que l'axe d'articulation soit au niveau du bord avant du support 6 et avantageusement de la face inférieure dudit support.

Pour l'orientation de ce support 6 et donc de l'ensemble des lamelles, la commande se situe à l'intérieur du véhicule et dans sa version simplifiée consiste en un système vis/écrou 5 traversant la traverse supérieure, par exemple, manoeuvré par une poignée 5A de manoeuvre.

On peut également monter un moteur électrique soit sur le système 5 à vis soit directement sur l'axe 7A d'articulation.

Pour déployer les lamelles, celles-ci sont montées sur une transmission, par exemple, déplaçant chaque lamelle l'une après l'autre.

Une lamelle va entraîner dans son mouvement une autre lamelle.

Selon cette première solution, les lamelles 3 coopèrent entre elles, au moins indirectement, par des butées.

Par exemple, on déplace vers l'arrière la lamelle située la plus au dessous, celle ci tire celle située au dessus et ainsi de suite. Le retour se fait à l'inverse avec d'autres butés.

Au lieu et place de ce type de transmission, on peut utiliser une transmission déplaçant les lamelles toutes en même temps.

Par exemple, les lamelles sont portées par une transmission 4A du type pantographe.

Les biellettes 10, montées en X composant le pantographe, sont articulées en leurs extrémités et en leurs points milieux.

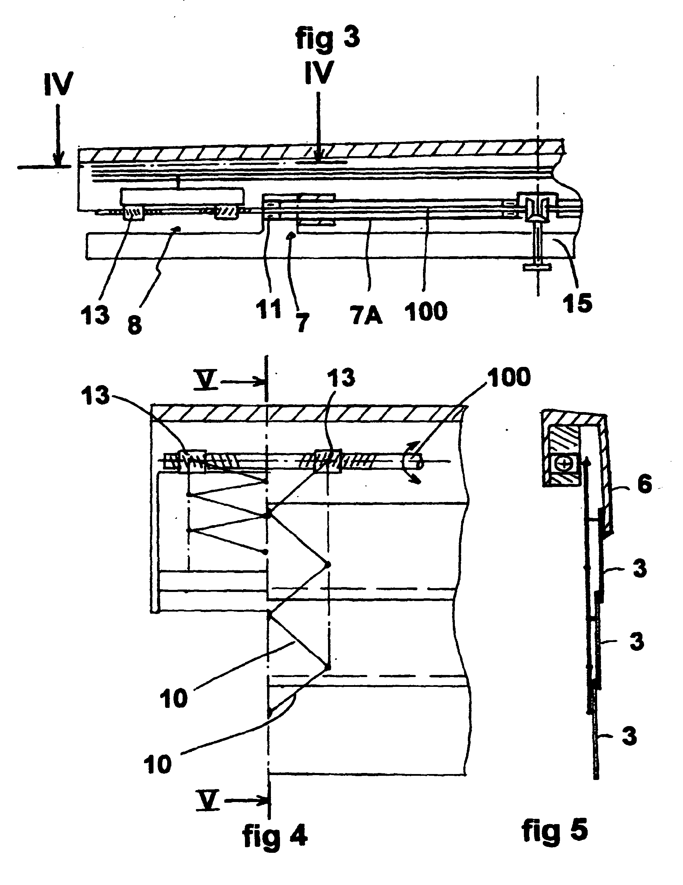

Sur chaque point milieu est attachée une lamelle 3 (fig 4).

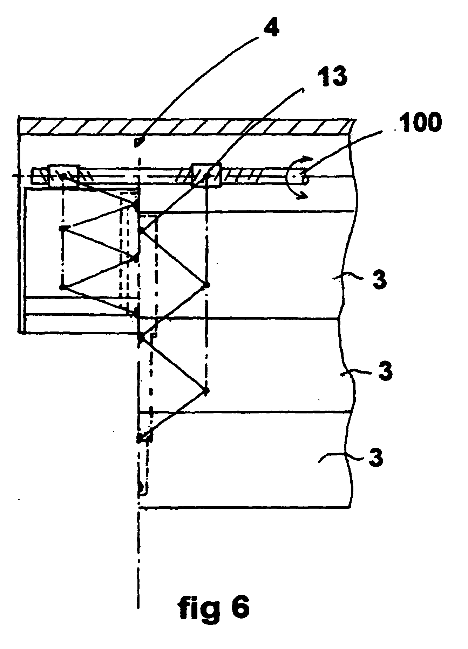

La figure 6 montre une variante utilisant un système à pantographe sur lequel sont montées trois glissières 4B portant chacune une lamelle.

La partie gauche montre le système en vue de dessus en position inactive et la partie droite montre le système en position déployée. Cette représentation en position inactive à gauche et déployée à droite se retrouve sur la figure 4.

Les glissières 4B situées aux extrémités sont fixées sur le pantographe 4A tandis que la glissière médiane coopère par coulissement avec les glissières aux extrémités.

Des moyens de limitations du déplacement des glissières (non représentés) tels des butées évitent la séparation des glissières lors de l'extension de l'ensemble des glissières.

Ces glissières constituent des moyens de guidage en translation des lamelles mais d'autres moyens peuvent convenir.

La glissière située au plus près de la face inférieure du support est également guidé en translation sur ce support.

Un système 8 à vis sans fin modifie la géométrie du pantographe et donc déplace les lamelles.

Cette vis sans fin est, par exemple, montée aux extrémités du pantographe agissant sur les deux biellettes extrêmes.

Cette vis sans fin agit sur deux écrous 13 portés par les extrémités des biellettes 10.

Un renvoi d'angle 12 permet de ramener la commande éventuellement dans l'habitacle au travers de la traverse supérieure.

Comme on peut le voir sur la figure 4, la vis sans fin est entraînée par un arbre monté coaxial à l'axe d'articulation autour duquel pivote le support 6.

La figure 3 montre ce montage coaxial.

L'arbre 100 d'entraînement de la vis sans fin sera logé dans l'axe d'articulation qui sera donc évidé.

Des paliers 11 seront prévus.

On voit également le renvoi d'angle 15 qui va commander les moyens de déplacement en translation des lamelles situés de chaque coté du véhicule. Il s'agit ici d'un jeu de pignons coniques.

Tout comme indiqué précédemment, au lieu d'une poignée de manoeuvre manuelle, on peut utiliser un moteur électrique 14 représenté en traits mixtes tout comme cela est possible sur la commande en orientation.

Les lamelles sont montées superposées avec, en position active, un recouvrement partiel des lamelles.

Avec ce déflecteur, on parvient à limiter son encombrement en position inactive.

Son étendue, en position déployée permet de rejeter le phénomène suffisamment loin pour ne pas gêner les passagers arrières. L'orientation des lamelles et donc du déflecteur permet également d'ajuster l'écoulement des flux d'air.

## Revendications

1. Déflecteur d'air avant destiné à équiper un véhicule **caractérisé en ce qu'**il comprend un ensemble de plusieurs lamelles (3) superposées et un moyen (4) de déplacement de ces lamelles (3) en vue d'au moins translater les dites lamelles les unes par rapport aux autres vers l'arrière pour étendre la surface du déflecteur.

2. Déflecteur d'air selon la revendication 1 **caractérisé en ce qu'**il comprend également un moyen (5) de manoeuvre pour orienter angulairement l'ensemble des lamelles (3).

3. Déflecteur d'air selon la revendication 1 **caractérisé en ce qu'**il comprend un moyen de guidage en translation des lamelles (3).

4. Déflecteur d'air selon la revendication 1 ou 2 **caractérisé en ce que**, pour déployer les lamelles, celles-ci sont montées sur une transmission déplaçant les lamelles toutes en même temps.

5. Déflecteur d'air selon la revendication 4 **caractérisé en ce que** la transmission comprend un pantographe.

6. Déflecteur d'air selon la revendication 5 **caractérisé en ce que** le pantographe comprend des biellettes (10) montées en X lesquelles biellettes sont articulées en leurs extrémités et en leurs points milieux et sur chaque point milieu est attachée une lamelle (3).

7. Déflecteur d'air selon la revendication 1 **caractérisé en ce que** pour déployer les lamelles, celles-ci sont montées sur une transmission déplaçant les lamelles l'une après l'autre.

8. Déflecteur d'air selon la revendication 7 **caractérisé en ce que** les lamelles (3) coopèrent entre elles, au moins indirectement, par des butées.

9. Déflecteur d'air selon la revendication 2 **caractérisé en ce que** l'ensemble des lamelles est porté par un support (6) permettant l'orientation angulaire.

10. Déflecteur d'air selon la revendication 9 **caractérisé en ce que** le support (6) se présente sous la forme d'un profilé en U couché, la cavité du U permettant de loger l'ensemble des lamelles, la face inférieure (6A) du U couché étant articulée sur la traverse supérieure du pare-brise.

11. Déflecteur d'air selon l'une quelconque des revendications précédentes **caractérisé en ce que** une commande d'orientation se situe à l'intérieur du véhicule et dans sa version simplifiée consiste en un système vis/ écrou (5) traversant une traverse supérieure.

12. Déflecteur d'air selon l'une quelconque des revendications précédente **caractérisé en ce que** le moyen de déplacement en translation des lamelles comprend une vis sans fin entraînée par un arbre monté coaxial à l'axe d'articulation autour duquel pivote le support (6).

13. Véhicule **caractérisé en ce qu'**il comprend un déflecteur selon l'une quelconque des revendications 1 à 12.

14. Véhicule selon la revendication 13 **caractérisé en ce que** le déflecteur est logé dans une traverse supérieure ayant localement une section en L.

## Claims

1. Front wind deflector intended for being fitted to a vehicle, **characterized in that** it comprises an assembly of several superimposed slats (3) and a means (4) of displacing these slats (3) for the purpose of at least displacing the said slats with translational motion relative to one another towards the rear to extend the deflector surface.

2. Wind deflector according to Claim 1, **characterized in that** it also comprises a means (5) of operation for angularly orienting the assembly of slats (3).

3. Wind deflector according to Claim 1, **characterized in that** it comprises a means of guiding the slats (3) in translational motion.

4. Wind deflector according to Claim 1 or 2, **characterized in that**, in order for the slats to be spread out, they are fitted to a transmission displacing all the slats at the same time.

5. Wind deflector according to Claim 4, **characterized in that** the transmission comprises a pantograph.

6. Wind deflector according to Claim 5, **characterized in that** the pantograph comprises connecting rods (10) fitted in an X-formation, which connecting rods are articulated at their ends and at their mid-points and at each mid-point a slat (3) is attached.

7. Wind deflector according to Claim 1, **characterized in that**, in order for the slats to be spread out, they are fitted to a transmission displacing the slats one after another.

8. Wind deflector according to Claim 7, **characterized in that** the slats (3) cooperate with one another, at least indirectly, by means of catches.

9. Wind deflector according to Claim 2, **characterized in that** the assembly of slats is carried by a support (6), with which angular orientation can be carried out.

10. Wind deflector according to Claim 9, **characterized in that** the support (6) has the shape of a recumbent U-section, it being possible with the cavity of the U to house the slat assembly, the lower face (6A) of the recumbent U being articulated on the windscreen top cross member.

11. Wind deflector according to any one of the preceding claims, **characterized in that** an orientation control is situated inside the vehicle and, in its simplified version, consists of a bolt/nut system (5) passing through a top cross member.

12. Wind deflector according to any one of the preceding claims, **characterized in that** the means of displacing the slats in translational motion comprises a worm driven by a shaft fitted coaxially with the articulation shaft about which the support (6) pivots.

13. Vehicle **characterized in that** it comprises a deflector according to any one of Claims 1 to 12.

14. Vehicle according to Claim 13, **characterized in that** the deflector is housed in a top cross member having an L-shaped section locally.

## Patentansprüche

1. Vorderer Luftabweiser zur Ausstattung eines Fahrzeugs, **gekennzeichnet dadurch, dass** er eine aus mehreren übereinander gelagerten Lamellen (3) bestehende Anordnung sowie ein Verschiebungsmittel (4) für diese Lamellen (3) enthält, welches den Zweck verfolgt, die besagten Lamellen jeweils voneinander mindestens nach hinten zu verschieben, um die Oberfläche des Abweisers zu erweitern.

2. Luftabweiser nach Anspruch 1, **gekennzeichnet dadurch, dass** er ebenfalls ein Betätigungsmittel (5) enthält, um die aus Lamellen (3) bestehende Anordnung winkelmäßig auszurichten.

3. Luftabweiser nach Anspruch 1. **gekennzeichnet dadurch, dass** er ein Verschiebungsführungsmittel für die Lamellen (3) enthält.

4. Luftabweiser nach dem Anspruch 1 oder 2, **gekennzeichnet dadurch, dass** die Lamellen zum Zwecke ihrer Entfaltung auf einer Übertragungseinrichtung montiert sind, welche alle Lamellen gleichzeitig verschiebt.

5. Luftabweiser nach dem Anspruch 4, **gekennzeichnet dadurch, dass** die Übertragungseinrichtung einen Stromabnehmer enthält.

6. Luftabweiser nach dem Anspruch 5, **gekennzeichnet dadurch, dass** der Stromabnehmer über Kreuz montierte Schubstangen (10) enthält, wobei diese Schubstangen an ihren Enden und ihren Mittelpunkten angelenkt sind und an jedem Mittelpunkt eine Lamelle (3) befestigt ist.

7. Luftabweiser nach dem Anspruch 1, **gekennzeichnet dadurch, dass** die Lamellen zum Zwecke ihrer Entfaltung auf einer Übertragungseinrichtung montiert sind, welche die Lamellen eine nach der anderen verschiebt.

8. Luftabweiser nach dem Anspruch 7, **gekennzeichnet dadurch, dass** die Lamellen (3) untereinander, zumindest indirekt, über Anschläge, kooperieren.

9. Luftabweiser nach dem Anspruch 2, **gekennzeichnet dadurch, dass** die aus Lamellen bestehende Anordnung durch einen Träger (6) getragen wird, welcher die winkelmäßige Ausrichtung ermöglicht.

10. Luftabweiser nach dem Anspruch 9, **gekennzeichnet dadurch, dass** der Träger (6) in der Form eines eingelegten U-Profils vorliegt, wobei der Hohlraum des U es ermöglicht, die aus Lamellen bestehende Anordnung zu beherbergen und die untere Seite (6A) des eingelegten U an der oberen Querstange der Windschutzscheibe angelenkt ist.

11. Luftabweiser nach einem der voranstehenden Ansprüche, **gekennzeichnet dadurch, dass** sich eine Ausrichtungssteuerung im Fahrzeuginnenraum befindet und in ihrer vereinfachten Ausführung aus einem Schrauben-/Mutter-System besteht, welches eine obere Querstange durchquert.

12. Luftabweiser nach einem der voranstehenden Ansprüche, **gekennzeichnet dadurch, dass** das Verschiebungsmittel für die Lamellen eine durch eine Welle angetriebene Schneckenschraube umfasst, welche durch eine Welle angetrieben ist, die koaxial zur Drehachse montiert ist, um welche der Träger (6) schwenkt.

13. Fahrzeug, **gekennzeichnet dadurch, dass** es einen Abweiser nach einem der Ansprüche 1 bis 12 enthält.

14. Fahrzeug nach Anspruch 13 **gekennzeichnet dadurch, dass** der Abweiser in einer oberen Querstange eingebaut ist, welche lokal einen L-Querschnitt hat.
